# EUROPEAN PATENT APPLICATION

(11) **EP 4 628 381 A1**
(43) Date of publication of application: **08.10.2025**
(21) Application number: 24168036.2
(22) Date of filing: 02.04.2024
(51) Int. Cl.: B60W 30/14, B60W 30/16

(54) **CONTROLL ARRANGEMENT AND METHOD FOR CONTROLLING AN ADAPTIVE CRUISE CONTROL SYSTEM**

(71) Applicant: Scania CV AB, 151 87 Södertälje (SE)
(72) Inventor: STAMP, Alexander, 141 63 Huddinge (SE); KARLSSON, David, 585 63 Linghem (SE)
(74) Representative: Scania CV AB

(57) **Abstract**

A control arrangement (100) and method for controlling an adaptive cruise control system (200) is disclosed. Said adaptive cruise control system (200) is configured to control travelling speed of a host vehicle (1, 20) in dependence of a reference minimum distance (d_ref). The reference minimum distance constitutes a control parameter defining a distance to target vehicle (22) towards which the host vehicle (20) is to be braked when approaching a target vehicle(22). The method comprises estimating a lateral velocity of a target vehicle (22), and adjusting a current reference minimum distance to a reduced reference minimum distance when the estimated lateral velocity of the target vehicle (22) exceeds an expected lateral velocity of the target vehicle (22) by at least a threshold value.

## Description

### TECHNICAL FIELD

The present disclosure relates in general to a method for controlling an adaptive cruise control system. The present disclosure further relates in general to a control arrangement configured to control an adaptive cruise control system.

Moreover, the present disclosure relates in general to a computer program and a computer-readable medium. The present disclosure also relates in general to an adaptive cruise control system comprising a control arrangement. Furthermore, the present disclosure relates in general to a vehicle comprising a control arrangement.

### BACKGROUND

Vehicle speed control systems that automatically controls the travelling speed of a vehicle are common in modern vehicles. Examples of vehicle speed control systems include for example various types of cruise control systems.

One example of a cruise control system is a traditional cruise control that aims at maintaining a substantially constant vehicle speed, such as a set speed selected by a driver of the vehicle. Such a traditional cruise control may often be referred to as a constant speed cruise control. A constant speed cruise control is typically configured to maintain the vehicle speed within a narrow allowable speed range about the set speed. A constant speed cruise control thus controls the vehicle with the aim to maintain the set speed set regardless of whether the vehicle is travelling uphill, downhill or on a horizontal running surface.

Another type of cruise control is a predictive cruise control. A predictive cruise control is a cruise control which uses information regarding characteristics of an upcoming road section, i.e. a road section ahead of the vehicle, and plans a driving strategy for the upcoming road section based on said information. The information regarding the upcoming road section may typically include at least topographic data and data relating to the curvature of the upcoming road section. Said data may typically be derived from map data in combination with information regarding geographical positioning of the vehicle, and may in some situations also be supplemented with for example historical data relating to previous instances that the vehicle, or another vehicle, has travelled the upcoming road section. The predictive cruise control then controls the operation of the vehicle powertrain in accordance with the planned driving strategy as the vehicle travels the road section in question, which thereby results in the vehicle speed varying in accordance with a vehicle speed profile.

Both a constant speed cruise controller and a predictive cruise controller may be supplemented with an adaptive cruise control function, if desired. The adaptive cruise control function is configured to automatically adjust the vehicle speed to maintain a safe distance (or desired distance) to other road users ahead of the vehicle. An adaptive cruise control function typically uses information from sensors arranged in or on the vehicle, such as radar, laser or image capturing devices (such as cameras), for the purpose of obtaining information regarding such other road users in front of the vehicle.

A cruise control system, such as a constant speed or predictive cruise control system, supplemented with an adaptive cruise control function may be referred to as an adaptive cruise control system.

US 2018/0043890 A1 discloses a control system of a host vehicle, said control system being configured to determine an overall likelihood of a lane change by another vehicle based on a movement-based likelihood and a traffic situation-based likelihood therefore. The movement-based likelihood is computed based on a determined lateral movement of the other vehicle relative to a lane of the other vehicle or the host vehicle. If the overall likelihood exceeds a predetermined threshold value, the control system may generate a signal to warn a driver of the host vehicle of a likely lane change by the other vehicle and/or to carry out an autonomous speed adaptation by the host vehicle and/or to carry out an autonomous driving maneuver by the host vehicle.

### SUMMARY

The object of the present invention is to improve energy efficiency, to thereby more efficiently use the propulsion energy stored onboard a vehicle, when using an adaptive cruise control system for the purpose of controlling travelling speed of the vehicle.

The object is achieved by the subject-matter of the appended independent claim(s).

In accordance with the present disclosure, a method for controlling an adaptive cruise control system is provided. The method is performed by a control arrangement. The adaptive cruise control system is configured to control travelling speed of a host vehicle in dependence of a reference minimum distance. The reference minimum distance constitutes a control parameter defining a distance to target vehicle towards which the host vehicle is to be braked when approaching a target vehicle having a lower travelling speed than the host vehicle. The method comprises a step of estimating a lateral velocity of a target vehicle present in front of the host vehicle. The method further comprises a step of, when the estimated lateral velocity of the target vehicle exceeds an expected lateral velocity of the target vehicle by at least a threshold value, adjusting a current reference minimum distance of the adaptive cruise control system to a reduced reference minimum distance.

The herein described method leads to a reduction of the amount braking, and in some cases even avoidance of a need for braking, of the host vehicle in situations where a target vehicle leaves, or is about to leave, a road or lane travelled by the host vehicle. The reason therefore is that the adaptive cruise control system, because of the adjustment of reference minimum distance, will control the travelling speed of the host vehicle so as to be braked towards a reduced distance to the target vehicle. This may in turn lead to a delay of initiation of braking of the host vehicle and/or a reduced amount of braking power needed. Therefore, the herein described method leads to improved possibilities for conservation of the kinetic energy of the host vehicle, and a reduction of the energy losses resulting from unnecessary braking of the host vehicle. In other words, the herein described method results in a more efficient usage of the propulsion energy stored onboard (e.g. as fuel and/or electrical energy) the host vehicle when the travelling speed of the host vehicle is controlled using an adaptive cruise control system.

The herein described method may also improve driver comfort because of the reduced braking needed. The method not only leads to a smoother ride but also reduces the risk for a driver of the host vehicle becoming annoyed by a reduction of the travelling speed of the host vehicle when it is clear to the driver that a vehicle in front of the host vehicle is about to leave the road or lane travelled by the host vehicle.

An estimated lateral velocity of a target vehicle is in many situations not in itself sufficient for determining whether the target vehicle is about to leave a road or lane travelled by the host vehicle. This is because the lateral velocity of a vehicle may vary depending on e.g., the curvature of the road. Therefore, the herein described method compares the estimated lateral velocity with an expected lateral velocity of the target vehicle when judging whether the target vehicle may be about to leave the (upcoming) travelling path of the host vehicle.

The herein described method may further comprise a step of determining the expected lateral velocity of the target vehicle based on a current estimated or measured lateral velocity of the host vehicle and/or characteristics of the road section in front of the host vehicle. This in turn leads to improved accuracy when comparing the expected and estimated lateral velocities of the target vehicle for the purpose of determining whether reference minimum distance of the adaptive cruise control system may be reduced, which in turn also improves road safety.

According to a first alternative, the reduced reference minimum distance may have a predefined value. This enables an easy control of the adaptive cruise control system and reduces the risk for calculation errors when seeking to adjust the reference minimum distance. However, according to a second alternative, the reduced reference minimum distance may have a value variable with the estimated lateral velocity of the target vehicle. In such a case, the method may further comprise a step of determining a value of the reduced reference minimum distance in dependence of the estimated lateral velocity of the target vehicle. This has the advantage of allowing for adaptation to the actual situation. For example, in case the estimated lateral velocity of the target vehicle demonstrates a relatively slow change of lane of the target vehicle, a longer (reduced) reference minimum distance may be appropriate compared to a case where the estimated lateral velocity of the target vehicle demonstrates that the target vehicle will quickly leave a host lane in which the host vehicle is present.

The above mentioned reference minimum distance may have a default value, which in turn is dependent of a targeted trailing distance. Such a targeted trailing distance may for example be a targeted trailing distance selected by a driver of the host vehicle (e.g., for being considered by the driver to constitute a safe distance to a vehicle in front of the host vehicle), but is not limited thereto. The default value of reference minimum distance is typically shorter than the targeted trailing distance.

The method may further comprise a step of, in response to a determination that a selected target vehicle of the adaptive cruise control system has been lost, adjusting the reference minimum distance of the adaptive cruise control system to a default value thereof, if not already corresponding to said default value of the reference minimum distance. Thereby, it is ensured that the adaptive cruise control system uses an appropriate reference minimum distance for the control of the travelling speed of the host vehicle when it identifies and selects a new target vehicle.

The method may further comprise the steps of, in response to a detection of a road user present in front of the host vehicle and in a lane adjacent to a host lane in which the host vehicle is present, estimating a lateral velocity of the detected road user, and determining whether the detected road user is about to enter the host lane based on the estimated lateral velocity of the road user. In such a case, the method may further comprise a step of, in response to a determination that the detected road user is about to enter the host lane, adjusting the current reference minimum distance to a default value of the reference minimum distance, if not already corresponding to said default value. This ensures that the adaptive cruise control system will use an appropriate reference minimum distance to account for e.g., a possible reduction of the travelling speed of the target vehicle because of the road user entering the host lane in front of the target vehicle, as well as reducing the risk for an accident should the detected road user enter the host lane behind the currently selected target vehicle. In other words, it reduces the risk for an accident that may occur in case the reference minimum distance of the adaptive cruise control system would be reduced when the detected road user has entered the host lane.

The method may further comprise a step of, in response to the determination that the detected road user is about to enter the host lane, controlling the adaptive cruise control system to select said road user as target vehicle if the detected road user is closer to the host vehicle than a currently selected target vehicle or if no target vehicle has been selected by the adaptive cruise control system. Thereby, the adaptive cruise control system may adapt the travelling speed of the host vehicle at an earlier stage compared to if the detected road user is identified as a target vehicle only after having entered the host lane. This in turn increases the road safety. Furthermore, it reduces the risk for the adaptive cruise control system needing to perform a sharp deceleration of the host vehicle and thereby increases driver comfort.

The present disclosure further relates to a computer program comprising instructions which, when executed by a computer, cause the computer to carry out the method as described above.

The present disclosure further relates to a computer-readable medium comprising instructions which, when executed by a computer, cause the computer to carry out the method as described above.

The present disclosure also provides to a control arrangement configured to control an adaptive cruise control system, said adaptive cruise control system being configured to control travelling speed of a host vehicle in dependence of a reference minimum distance. The reference minimum distance constitutes a control parameter defining a distance to target vehicle towards which the host vehicle is to be braked when approaching a target vehicle having a lower travelling speed than the host vehicle. The control arrangement is configured to estimate a lateral velocity of a target vehicle present in front of the host vehicle. The control arrangement is further configured to, when the estimated lateral velocity of the target vehicle exceeds an expected lateral velocity of the target vehicle by at least a threshold value, adjust a current reference minimum distance of the adaptive cruise control system to a reduced reference minimum distance.

The control arrangement provides the same advantages as described above with reference to the corresponding method for controlling an adaptive cruise control system as described herein.

The control arrangement may for example be configured to determine the expected lateral velocity of the target vehicle based on a current estimated or measured lateral velocity of the host vehicle and/or characteristics of the road section in front of the host vehicle.

The control arrangement may further be configured to, in response to a determination that a selected target vehicle of the adaptive cruise control system has been lost, adjust the reference minimum distance of the adaptive cruise control system to a default value thereof, if not already corresponding to the default value of the reference minimum distance.

Moreover, the control arrangement may be configured to, in response to a detection of a road user present in front of the host vehicle and in a lane adjacent to a host lane in which the host vehicle is present, estimate a lateral velocity of the road user, and determine whether the road user is about to enter the host lane based on the estimated lateral velocity of the road user. The control arrangement may further be configured to, in response to a determination that the road user is about to enter the host lane, adjust the current reference minimum distance to a default value of the reference minimum distance, if not already corresponding to said default value.

The present disclosure also provides an adaptive cruise control system configured to control travelling speed of a host vehicle in dependence of a reference minimum distance, wherein the reference minimum distance constitutes a control parameter defining a distance to target vehicle towards which the host vehicle is to be braked when approaching a target vehicle having a lower travelling speed than the host vehicle. The adaptive cruise control system comprises the control arrangement as described above.

The present disclosure further relates to a vehicle comprising the above described control arrangement. The vehicle may further comprise an adaptive cruise control system configured to control the travelling speed of the vehicle. The vehicle may be a land-based heavy vehicle, such as a truck or a bus, but is not limited thereto. The vehicle may be a combustion engine driven vehicle, a hybrid electric vehicle (such as a mild hybrid, mHEV, or a plug-in hybrid vehicle, PHEV), a fully electric vehicle (such as a battery electric vehicle, BEV), or a fuel cell vehicle (FCEV).

### BRIEF DESCRIPTION OF DRAWINGS

- Fig. 1: schematically illustrates a side view of an example of a vehicle,
- Fig. 2: illustrates an example of a traffic situation where a host vehicle is approaching a slower moving target vehicle,
- Fig. 3: illustrates an example of a traffic situation where a target vehicle is about to leave a lane travelled by the host vehicle,
- Fig. 4: illustrates an example of a traffic situation in which a host vehicle and a target vehicle is travelling on a curved road,
- Fig. 5: represents a flowchart schematically illustrating a first exemplifying embodiment of the herein described method for controlling an adaptive cruise control system,
- Fig. 6: represents a flowchart schematically illustrating a second exemplifying embodiment of the herein described method for controlling an adaptive cruise control system, and
- Fig. 7: schematically illustrates an exemplifying embodiment of a device that may comprise, consist of, or be comprised in the herein described control arrangement configured to control an adaptive cruise control system.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

An adaptive cruise control system is in the present disclosure considered to mean a cruise control system (such as a predictive cruise control system or a constant speed cruise control system) supplemented with an adaptive cruise control function, said adaptive cruise control function being configured to automatically adjust the vehicle speed of a host vehicle to maintain a safe distance to a target vehicle. It is well known in the art that what is regarded as a safe distance may vary depending on the circumstances (including configuration of the host vehicle and available braking power, vehicle speed, weather conditions etc.) and may constitute either an actual distance (such as in meters) or a time distance (such as in seconds).

The term "host vehicle" is in the present disclosure intended to mean a vehicle whose travelling speed is, or at least may be, controlled by the herein described adaptive cruise control system. Thus, a host vehicle is a vehicle comprising the adaptive cruise control system.

Furthermore, the term "target vehicle" is intended to mean a vehicle present in front of the host vehicle, as seen in the direction of travel of the host vehicle, and in relation to which a safe distance is to be maintained by the host vehicle. In other words, a target vehicle is a vehicle relative to which the adaptive cruise control system is configured to control the travelling speed of the host vehicle so that a safe distance can be maintained.

Any other vehicle, present in the vicinity of the host vehicle and not currently identified as a target vehicle by the adaptive cruise control system, is in the present disclosure considered to be encompassed by the term "road user".

Moreover, the terms "travelling speed" of a vehicle and "vehicle speed" are in the present disclosure used interchangeably, and should thus be considered to have the same meaning. Furthermore, both these terms refer to a longitudinal velocity of a vehicle.

The term "host lane" as used herein is intended to refer to a road lane in which the host vehicle is currently present.

Furthermore, in the present disclosure, the term "trailing distance" is intended to mean a distance between a host vehicle, whose travelling speed is controlled by the adaptive cruise control system, and a target vehicle, selected by the adaptive cruise control system for the purpose of controlling the travelling speed of the host vehicle.

The present disclosure relates to a method for controlling an adaptive cruise control system of a host vehicle. The adaptive cruise control system is configured to control travelling speed of the host vehicle in dependence of a reference minimum distance. The reference minimum distance constitutes a control parameter defining a distance to target vehicle towards which the host vehicle is to be braked when approaching a target vehicle that has a lower travelling speed than the host vehicle.

The adaptive cruise control system may further be configured to control the travelling speed of the host vehicle in dependence of a targeted trailing distance, which constitutes a control parameter defining a targeted distance to the target vehicle that the adaptive cruise control system should seek the host vehicle to maintain in case a current set speed of adaptive cruise control system is higher than the travelling speed of the target vehicle. A set speed of the adaptive cruise control system is in turn the travelling speed which the adaptive cruise control system should seek to maintain when there is no target vehicle, and thus also constitutes a control parameter of the adaptive cruise control system.

The herein described method for controlling an adaptive cruise control system comprises a step of estimating a lateral velocity of a target vehicle present in front of the host vehicle. The estimation may be made based on information relating to the target vehicle, said information derived from one or more sensors arranged in or on the host vehicle. Examples of such sensors includes radar, laser (such as lidar), and one or more image capturing devices (such as cameras). Parameters of the target vehicle, detected by means of said sensors, may be digitally analyzed in accordance with previously known techniques therefore where needed to obtain the information desired for making the estimation of the lateral velocity of the target vehicle.

The method further comprises a step of, when the estimated lateral velocity of the target vehicle exceeds an expected lateral velocity of the target vehicle by at least a threshold value, adjusting a current reference minimum distance of the adaptive cruise control system to a reduced reference minimum distance (unless the current reference minimum distance of the adaptive cruise control system already corresponds to said reduced reference minimum distance). The threshold value may represent a safety margin to avoid incorrect or inappropriate adjustments of the reference minimum distance. The threshold value may be selected to take into account for example uncertainties in the estimated and/or expected lateral velocity of the target vehicle.

A reduction of the reference minimum distance means that the adaptive cruise control system will, when controlling the travelling speed of the host vehicle, brake the host vehicle towards a shorter distance to the target vehicle. This in turn means that braking of the vehicle will start at a later point in time and/or a lower braking power will be used for decreasing the vehicle speed.

As evident from the above, the estimated lateral velocity of the target vehicle is in accordance with the herein described method compared to an expected lateral velocity of the target vehicle. Thus, the method may also comprise a step of determining an expected lateral velocity of the target vehicle. The determination of an expected lateral velocity may for example be made based on a current lateral velocity of the host vehicle. The current lateral velocity of the host vehicle may in turn be determined in accordance with any previously known method therefore, including being estimated based on known parameters or directly measured. Alternatively, the determination of an expected lateral velocity of the target vehicle may be made based on characteristics of the road section in front of the host vehicle, such as curvature of the road section. Relevant characteristics of a road section in front of the host vehicle may be derived from map data (when viewed in combination with geographical positioning of the host vehicle) and/or determined by image analysis of information captured by one or more image capturing devices arranged onboard the host vehicle. According to yet an alternative, the expected lateral velocity of the target vehicle may be determined based on both the current (estimated or measured) lateral velocity of the host vehicle and characteristics of the road section in front of the host vehicle.

According to a first alternative, the step of adjusting the current reference minimum distance of the adaptive cruise control system may comprise adjusting to a reduced reference minimum distance having a predefined value. Such a predefined value may in turn be dependent on for example the configuration as well as current load of the host vehicle, as well as other factors that may affect the ability to decelerate the host vehicle. This in turn means that there may be a set of predefined values for a reduced minimum distance. Such a set of predefined values may be stored in a look-up table or the like in order to allow the control arrangement configured to perform the herein described method to retrieve the appropriate predefined value of the reduced minimum distance when performing the herein described method.

According to a second alternative, the reduced minimum distance may have a variable value depending on the estimated lateral velocity of the target vehicle. In such a case, the method may comprise a step of determining a value of the reduced reference minimum distance in dependence of the estimated lateral velocity of the target vehicle. Compared to the first alternative of a predefined value of the reduced reference minimum distance, the second alternative may require more calculations to be performed. However, it also provides the advantage of an improved adaptation of the control of the travelling speed of the host vehicle to the particular circumstances. This may in turn further improve the energy efficiency as well as the driver comfort when the adaptive cruise control system controls the travelling speed of the host vehicle.

Irrespectively of the above described alternatives for a reduced value of the reference minimum distance, the reference minimum distance may have a predefined default value. Such a default value of the reference minimum distance may be dependent on a value of a targeted trailing distance. As previously mentioned, the targeted trailing distance constitutes a control parameter of the adaptive cruise control system. The targeted trailing distance may be a targeted trailing distance selected by a driver of the host vehicle. Alternatively, the targeted trailing distance may be a predefined targeted trailing distance selected in dependence of factors affecting the ability to decelerate the host vehicle, such as configuration of the host vehicle and vehicle load of the host vehicle.

An adaptive cruise control system is configured to select a road user in front of the host vehicle as the target vehicle only when such a road user is present in relation to the host vehicle such that there may be a risk for an accident. This means that, e.g. a road user present in a lane different from the host lane in which the host vehicle is travelling, will typically not be selected by the adaptive cruise control system as a target vehicle. Furthermore, when a road user that has previously been selected as the target vehicle has left e.g, the host lane, the adaptive cruise control system will no longer consider said road user as a target vehicle. This could alternatively be described as a loss of a selected target vehicle of the adaptive cruise control system. A loss of a selected target vehicle of the adaptive cruise control system may also occur e.g., when a preciously selected target vehicle increases its travelling speed such that it drives away from the host vehicle. A loss of a selected target vehicle may also occur for example due to malfunction in the continued identification of the target vehicle, e.g., through loss of information from a sensor used to identify a target vehicle.

The herein described method may comprise a step of, in response to a determination that a selected target vehicle of the adaptive cruise control system has been lost, adjusting the reference minimum distance of the adaptive cruise control system to a default value thereof, if not already corresponding to said default value of the reference minimum distance. Thereby, it may be avoided that the adaptive cruise control system uses a reduced reference minimum distance when seeking to control the travelling speed of the host vehicle after having selected a new target vehicle. Using a reduced reference minimum distance in such a situation may present an increased risk for collision of the host vehicle with the new target vehicle and is therefore not desired.

Another example of a situation where a reduced reference minimum distance may present an increased risk for an accident may be when another road user (other than the target vehicle) turns such that it e.g., enters into the lane travelled by the host vehicle. This could for example lead to the currently selected target vehicle braking to avoid an accident with the other road user if said road user is entering in front of the target vehicle, or in worst case that the other road user enters the lane in front of the target vehicle at a closer distance than the currently selected target vehicle. Even in case no target vehicle has been selected by the adaptive cruise control system, a reduced reference minimum distance may present an increased risk for accident for risking to be too short.

Therefore, the herein described method may further comprise a step of, in response to a detection of a road user present in front of the host vehicle and in a lane adjacent to a host lane in which the host vehicle is present, estimating a lateral velocity of the detected road user. Thereafter, the method may comprise a step of determining whether the detected road user is about to enter the host lane based on the estimated lateral velocity of said road user. This may be performed through comparison of the estimated lateral velocity with an expected lateral velocity of the detected road user, if desired. The method may further comprise a step of, in response to a determination that the detected road user is about to enter host lane, adjusting the current reference minimum distance to the default value of the reference minimum distance, if not already corresponding to said default vale. Thereby, an appropriate value of the reference minimum distance will be used by the adaptive cruise control system when the other road user enters in front of the host vehicle.

The method may further comprise a step of, in response to the above mentioned determination that the detected road user is about to enter the host lane, controlling the adaptive cruise control system to select said detected road user as target vehicle if the detected road user is closer to the host vehicle than the currently selected target vehicle of the adaptive cruise control system. Furthermore, the method may also comprise, in response to the above mentioned determination that the detected road user is about to enter the host lane, controlling the adaptive cruise control system to select said detected road user as target vehicle in situations where the adaptive cruise control system has no currently selected target vehicle. Through selecting the detected road user as the target vehicle before it is actually in front of the host vehicle, the adaptive cruise control system may better adapt the control of the travelling speed of the host vehicle to the particular circumstances. This may in turn improve road safety, the energy efficiency of the host vehicle as well as driver comfort.

The performance of the herein described method for controlling an adaptive cruise control system may be governed by programmed instructions. These programmed instructions may take the form of a computer program which, when executed by a computer, cause the computer to effect desired forms of control action. Such a computer may for example be comprised in the control arrangement as described herein. A computer is in the present disclosure considered to mean any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner.

The above described programmed instructions, which may take the form of a computer program, may be stored on a computer-readable medium. Hence, the present disclosure also relates to a computer-readable medium storing instructions, which when executed by computer, cause the computer to carry out the herein described method for controlling an adaptive cruise control system. The computer-readable medium may be a non-transitory computer-readable medium, such as a tangible electronic, magnetic, optical, infrared, electromagnetic, and/or semiconductor system, apparatus, and/or device.

The present disclosure further relates to a control arrangement configured to control an adaptive cruise control system of a host vehicle. The control arrangement may be configured to perform any one of the steps of the method for controlling an adaptive cruise control system as described above.

More specifically, in accordance with the present disclosure, a control arrangement configured to control an adaptive cruise control system of a host vehicle is provided. Said adaptive cruise control system is configured to control travelling speed of a host vehicle in dependence of a reference minimum distance, wherein the reference minimum distance constitutes a control parameter defining a distance to target vehicle towards which the host vehicle is to be braked when approaching a target vehicle having a lower travelling speed than the host vehicle. The control arrangement is configured to estimate a lateral velocity of a target vehicle present in front of the host vehicle. The control arrangement is further configured to, when the estimated lateral velocity of the target vehicle exceeds an expected lateral velocity of the target vehicle by at least a threshold value, adjust a current reference minimum distance of the adaptive cruise control system to a reduced reference minimum distance.

The control arrangement may comprise one or more control units. In case of the control arrangement comprising a plurality of control units, each control unit may be configured to control a certain function/step or a certain function/step may be divided between more than one control units.

The control arrangement may be a control arrangement of the adaptive cruise control system. Alternatively, the control arrangement may be any other control arrangement of the host vehicle. In such a case, the control arrangement is configured to communicate with the adaptive cruise control system for the purpose of performing the herein described method.

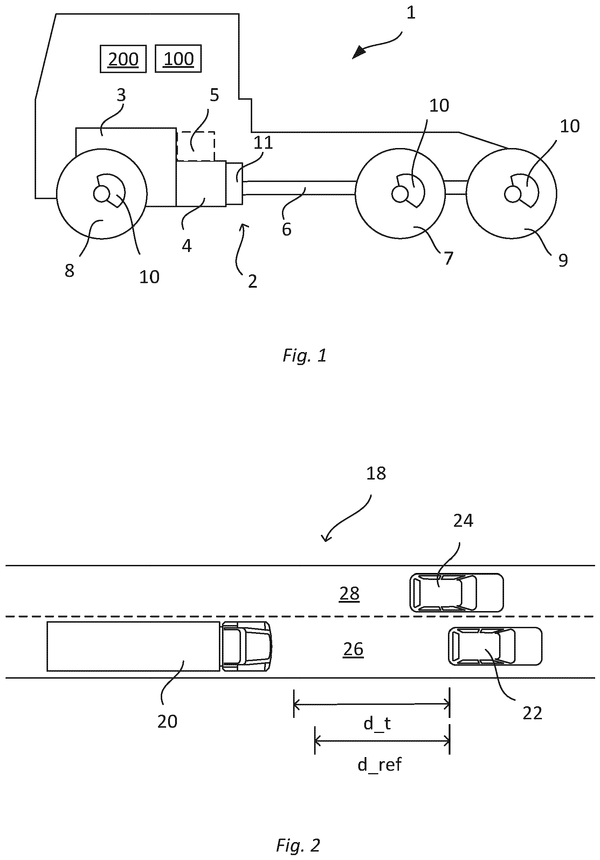

Figure 1 schematically illustrates a side view of an example of a vehicle 1, here illustrated as a truck. The exemplified vehicle 1 comprises a powertrain 2 comprising at least one propulsion unit, such as a combustion engine 3, and a transmission arrangement 4. The transmission arrangement 4 may be connected to the drive wheels 7 of the vehicle 1 via an output shaft 6 of the transmission arrangement 4 and a drive shaft (not shown). The vehicle further comprises front wheels 8 and optionally also tag axle wheels 9. The vehicle 1 may, if desired, comprise a plurality of drive axles with associated drive wheels 7.

It should be noted that the present disclosure is not limited to a vehicle driven solely by a combustion engine. The vehicle 1 may additionally, or alternatively, comprise one or more electrical machines 5 serving as propulsion unit(s).

The vehicle 1 comprises a service brake system comprising service brakes arranged at the drive wheels 7, at the front wheels 8, and/or any other wheel of the vehicle 1 as shown in the figure. The vehicle 1 may further comprise one or more auxiliary brake systems. For example, the vehicle 1 may comprise an auxiliary brake system in the form of a retarder 11. Such a retarder 11 may for example be connected to an output shaft of the transmission arrangement 4 as illustrated in the figure. Alternatively, the retarder may be connected to a shaft of the combustion engine 3. Additionally, or alternatively, the vehicle 1 may comprise an auxiliary brake system in the form of an engine brake system. The engine brake system may for example be a compression release brake system, an exhaust brake system, or a variable vane brake system. Furthermore, when present, the electrical machine 5 may also serve as an auxiliary brake system in the form of a regenerative brake system. When serving as a regenerative brake system, the electrical machine 5 is operated as generator for the purpose of converting kinetic energy of the vehicle to electrical energy which for example may be used to charge an energy storage device (not shown) of the vehicle. The energy stored in the energy storage device may thereafter be used for the purpose of driving the electrical machine when the electrical machine is operated as a propulsion unit of the vehicle.

The vehicle may further comprise an adaptive cruise control system 200. The adaptive cruise control system 200 is configured to, when activated, control the travelling speed of the vehicle 1. For said purpose, the adaptive cruise control system 200 may be configured to control the propulsion unit(s), such as the combustion engine 3 and/or electrical machine 5, the transmission arrangement 4 as well as the brake systems, i.e. the service brake system and each of the auxiliary brake systems described above. The adaptive cruise control system may be configured to control the travelling speed in dependence of various control parameters, including a targeted trailing distance and a reference minimum distance.

The vehicle 1 may further comprise the herein described control arrangement 100 configured to control the adaptive cruise control system 200. The control arrangement 100 may be a part of the adaptive cruise control system 200. Alternatively, the control arrangement 100 may be separate from the adaptive cruise control system 200, but configured to communicate therewith at least for the purpose of performing the herein described method for controlling an adaptive cruise control system.

Figure 2 illustrates an example of a traffic situation where a host vehicle 20, such as the vehicle 1 shown in figure 1, is travelling along a road 18. The illustrated road 18 comprises two lanes 26, 28. The lane in which the host vehicle 20 is travelling is in the present disclosure denominated host lane 26. According to the illustrated example, the host vehicle 20 is approaching a slower moving vehicle travelling in the same lane, said vehicle constituting a target vehicle 22 for the adaptive cruise control system of the host vehicle 20. The figure also illustrates another road user 24, travelling in the lane 28 which is adjacent to the host lane 26.

An adaptive cruise control system of the host vehicle 20 is configured to control the travelling speed of the host vehicle in dependence of various control parameters, such as a targeted trailing distance d_t and a reference minimum distance d_ref. The targeted trailing distance d_t defines a targeted distance to the target vehicle 22 that the adaptive cruise control system should seek to maintain in case a current set speed of adaptive cruise control system is higher than the travelling speed of the target vehicle. In the figure, the host vehicle 20 has not yet reached the targeted trailing distance d_t. The reference minimum distance d_ref defines the distance to the target vehicle 22 towards which the host vehicle 20 is to be braked when approaching a target vehicle 22 that has a lower travelling speed than the host vehicle 20. The reference minimum distance d_ref is typically shorter than the targeted trailing distance d_t, as also shown in the figure.

When the host vehicle 20 approaches the slower moving target vehicle 22, the adaptive cruise control system will decelerate the host vehicle 20 such that the host vehicle 20 reaches a travelling speed which is equal to or lower than the travelling speed of the target vehicle 22 when the distance between the vehicles corresponds to the reference minimum distance d_ref. As the vehicles 20, 22 continue to travel along the road 18, the adaptive cruise control system will control the travelling speed of the host vehicle 20 with the goal to maintain a trailing distance (relative to the target vehicle 22) corresponding to the targeted trailing distance d_t. In case the target vehicle 22 would accelerate away from the host vehicle 20, the adaptive cruise control system would control the travelling speed of the host vehicle 20 to increase to a current set speed of the adaptive cruise control system. A set speed as well as a targeted trailing distance for the adaptive cruise control system may for example be selected by a driver of the host vehicle 20. However, the reference minimum distance is typically not a control parameter that may be selected by a driver of the host vehicle 20.

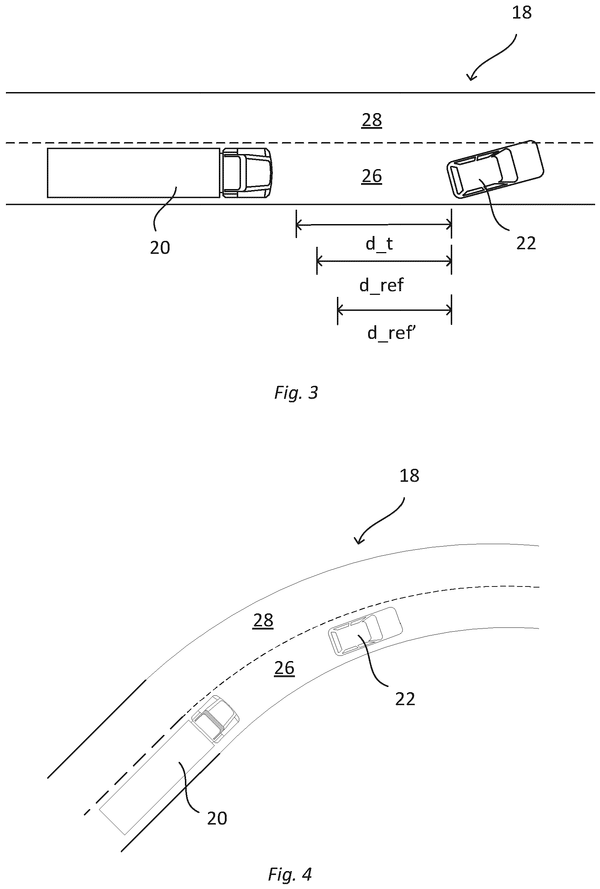

Figure 3 illustrates an example of a traffic situation corresponding to the one shown in Figure 2, but where the target vehicle 22 has started to steer to the left for the purpose of changing lane from the host lane 26 to the adjacent lane 28. The target vehicle 22 will therefore have a lateral velocity which is higher compared to if it would continue to travel in the host lane 26. The lateral velocity of the target vehicle 22 may therefore be seen as indicative of an intention to change lane. When the target vehicle 22 has left the host lane 26, there is no need to maintain a safe distance to the target vehicle 22 since it is no longer in front of the host vehicle 20. The change of lane of the target vehicle 22 may therefore lead to a reduced need for braking of the host vehicle 20 for avoiding a collision with the target vehicle 22. For the purpose of avoiding undue braking of the host vehicle 20, the herein described method comprises a step of adjusting the reference minimum distance d_ref to a reduced reference minimum distance d_ref'. Said adjustment is performed when an estimated lateral velocity of the target vehicle exceeds an expected lateral velocity of the target vehicle by at least a threshold. In view of both the host vehicle 20 and the target vehicle 22 travelling along a straight road according to the example, the expected lateral velocity of the target vehicle 22 when travelling said road may be considered to correspond to the lateral velocity of the host vehicle 20.

Figure 4 illustrates yet another example of a traffic situation where a target vehicle 22 is present in front of the host vehicle 20. The host vehicle 20 is here illustrated as about to enter a curved portion of the road 18, whereas the target vehicle 22 is already in said curved portion of the road 18. This means that the lateral velocity of the target vehicle 22 is different from the lateral velocity of the host vehicle 20. In this situation, it is appropriate to consider at least the curvature of the road 18 when determining an expected lateral velocity of the target vehicle 22 to be compared to the estimated lateral velocity in accordance with the herein described method.

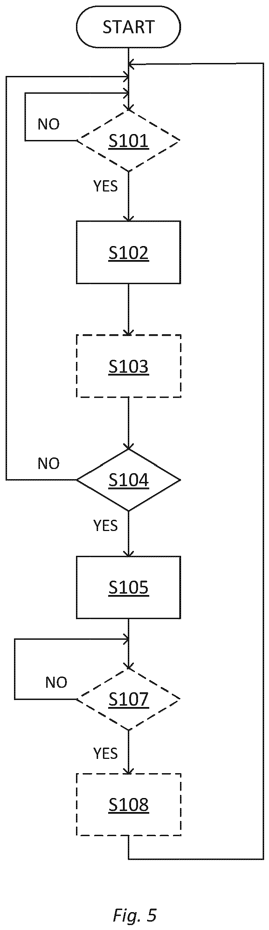

Figure 5 represents a flowchart schematically illustrating a first exemplifying embodiment of the herein described method for controlling an adaptive cruise control system. In the figure, optional steps of the first exemplifying embodiment are illustrated using dashed lines.

The method may comprise a step S101 of determining whether the adaptive cruise control system has selected a target vehicle. If no target vehicle has been selected by the adaptive cruise control system, the method may revert to start. One example of a situation where the adaptive cruise control system has not selected a target vehicle may be when there is no road user present in front of the host vehicle within the detectable (or selected) horizon of the adaptive cruise control system. However, if the adaptive cruise control system has selected a target vehicle, the method may proceed to subsequent steps.

The method comprises a step S102 of estimating a lateral velocity of the target vehicle. The estimation of the lateral velocity of the target vehicle may be made based on parameters determined using sensors in or on the host vehicle.

The method may further comprise a step S103 of determining an expected lateral velocity of the target vehicle, unless such an expected lateral velocity is already known. The expected lateral velocity may for example be previously known in case it has been previously decided to use the lateral velocity of the host vehicle as the expected lateral velocity of the target vehicle, and the currently lateral velocity of the host vehicle is already available (e.g. for being determined for other purposes). When the expected lateral velocity is not previously known, it may for example be determined based on characteristics of the upcoming road section (such as curvature of road and/or lane), optionally in combination with the current lateral velocity of the host vehicle. When the current lateral velocity of the host vehicle is not already available/known and is to be used when determining the expected lateral velocity of the target vehicle, step S103 may naturally further comprise estimating or measuring the lateral velocity of the host vehicle.

Although step S103 is illustrated as performed after step S102 in the figure, steps S102 and S103 may be performed in any order, or in parallel, without departing from the herein described method for controlling an adaptive cruise control system.

The method further comprises a step S104 of determining whether the estimated lateral velocity of the target vehicle exceeds the expected lateral velocity of the target vehicle by at least a threshold value. If not, the method may revert to start. However, in case the estimated lateral velocity of the target vehicle exceeds the expected lateral velocity of the target vehicle by at least the threshold value, the method proceeds to the subsequent step S105.

The step S105 comprises adjusting the current reference minimum distance of the adaptive cruise control system to a reduced reference minimum distance, unless already corresponding to the reduced reference minimum distance.

The method may further comprise a step S107 of determining whether the selected target vehicle is lost. The target vehicle may for example be lost due to having changed lane (from the host lane in which the host vehicle is present) and therefore no longer selected as target vehicle by the adaptive cruise control system. Alternatively, the target vehicle may be lost for having been accelerated to a higher speed than the host vehicle. According to yet an alternative, the target vehicle may be lost due to failure to identify or determine speed of the target vehicle, for example as a result of a sudden malfunction in a sensor of the host vehicle configured to determine such parameters. Step S107 may be repeated until it is determined that the selected target vehicle is lost.

After step S107, the method may comprise a step S108 of adjusting the current reference minimum distance of the adaptive cruise control system (the current reference minimum distance constituting the reduced reference minimum distance resulting from step S105) to a default reference minimum distance. In other words, step S108 comprises controlling the adaptive cruise control system to revert to a default value of the reference minimum distance.

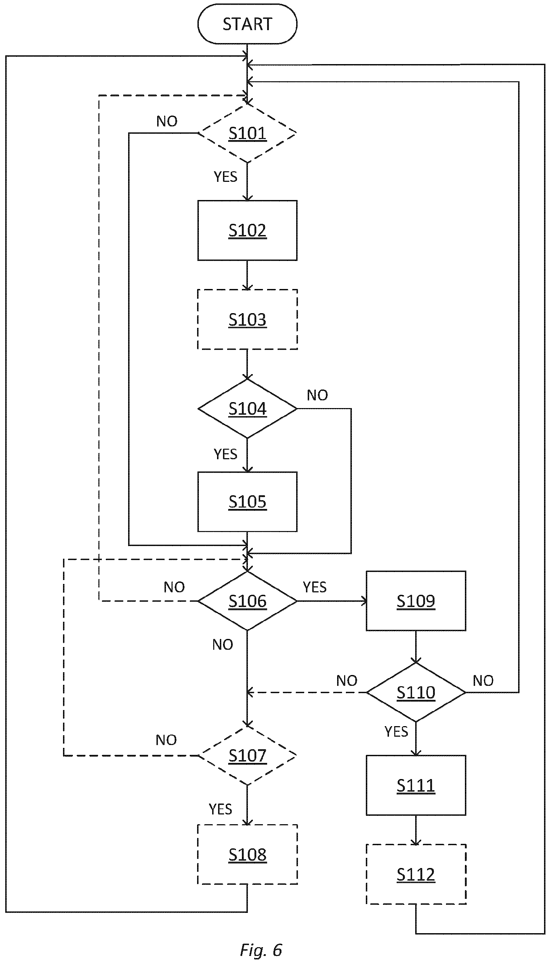

Figure 6 represents a flowchart schematically illustrating a second exemplifying embodiment of the herein described method for controlling an adaptive cruise control system. In the figure, optional steps of the second exemplifying embodiment are illustrated using dashed lines. Steps of the second exemplifying embodiment that correspond to steps of the first exemplifying embodiment are referenced with the same numbering as used above with regard to the first exemplifying embodiment.

Like in the first exemplifying embodiment described above, the method according to the second exemplifying embodiment may comprise a step S101 of determining whether the adaptive cruise control system has selected a target vehicle. In case, the adaptive cruise control system has selected a target vehicle, the method proceeds to steps S102-S105 as already described above, except that step S105 is not performed if it determined in step S104 that the estimated lateral velocity of the target vehicle does not exceed the expected lateral velocity of the target vehicle by at least a threshold value. However, in case it is determined in step S101 that no target vehicle has been selected by the adaptive cruise control system, the method may according to the second exemplifying embodiment proceed directly to a step S106 as shown in the figure.

The method according to the second exemplifying embodiment comprises a step S106 of determining whether a road user, present in front of the host vehicle and in a lane adjacent to a host lane in which the host vehicle is present, can be detected. Such a detection may be performed using the above described sensors. In case a road user, which is present in front of the host vehicle but in a lane adjacent to the host lane in which the host vehicle is present, has been detected, the method proceeds to a step S109 of estimating a lateral velocity of said road user.

After step S109, the method according to the second exemplifying embodiment comprises a step S110 of determining whether the detected road user is about to enter the host lane based on the estimated lateral velocity of the road user. In case it is determined that the road user is about to enter the host lane, the method proceeds to a step Sill of adjusting the current reference minimum distance to a default value thereof, if not already corresponding to said default value.

The method may after step Sill further comprise a step S112 of, in response to the above described determination that the road user is about to enter the host lane, control the adaptive cruise control system to select said road user as target vehicle if the road user is closer to the host vehicle than a possible currently selected target vehicle of the adaptive cruise control system. Although step S112 is illustrated in the figure as performed after step S111, it may alternatively be performed prior to, or in parallel with, step S111. In case step S112 is not present, the adaptive cruise control system will reselect the target vehicle only after the road user has entered the host lane. Thus, step S112 has the advantage of allowing an earlier adaptation in the control of the travelling speed of the host vehicle by the adaptive cruise control system. After step S112, the method may revert to start.

Reverting now to step S106. In case step S106 reveals no detection of a road user present in front of the host vehicle and in a lane adjacent to the host lane, the method may, if step S105 has been performed, proceed to step S107 of determining whether a selected target vehicle has been lost. In case the selected target vehicle has been lost, the method may proceed to step S108 and thereafter be returned to start as already described above with regard to the first exemplifying embodiment of the herein described method. However, when step S105 has not been performed and step S106 reveals that no detection of a road user present in front of the host vehicle in a lane adjacent to the host lane (i.e. when there is neither a selected target vehicle nor a road user in an adjacent lane), the method may revert to start.

In case it is not determined in step S110 that the detected road user is about to enter the host lane, the method may be reverted to start if no target vehicle has been selected by the adaptive cruise control system, or proceed to step S107 if a target vehicle has been selected by the adaptive cruise control system.

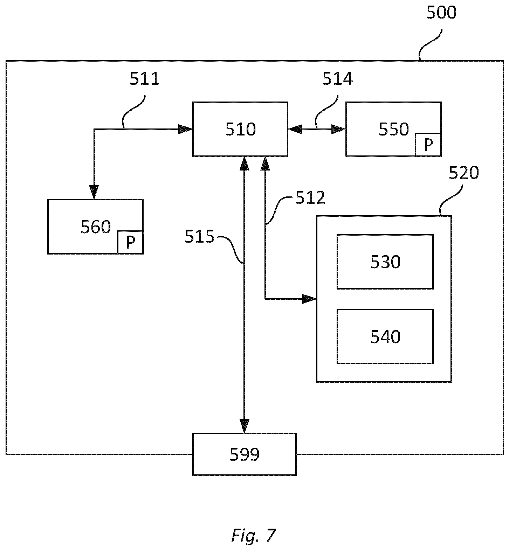

Figure 7 schematically illustrates an exemplifying embodiment of a device 500. The control arrangement 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for controlling an adaptive cruise control system. Said adaptive cruise control system is configured to control travelling speed of a host vehicle in dependence of a reference minimum distance, wherein the reference minimum distance constitutes a control parameter defining a distance to target vehicle towards which the host vehicle is to be braked when approaching a target vehicle having a lower travelling speed than the host vehicle. The computer program comprises instructions for estimating a lateral velocity of a target vehicle present in front of the host vehicle. The computer program further comprises instructions for, when the estimated lateral velocity of the target vehicle exceeds an expected lateral velocity of the target vehicle by at least a threshold value, adjusting a current reference minimum distance of the adaptive cruise control system to a reduced reference minimum distance.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection such as an optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be effected by the device 500 by means of the data processing unit 510 which runs the program stored in the memory 560 or the read/write memory 550. When the device 500 runs the program, methods herein described are executed.

## Claims

1. A method, performed by a control arrangement (100) (100), for controlling an adaptive cruise control system (200),
said adaptive cruise control system (200) being configured to control travelling speed of a host vehicle (20) in dependence of a reference minimum distance (d_ref),
the reference minimum distance (d_ref) constituting a control parameter defining a distance to target vehicle (22) towards which the host vehicle (20) is to be braked when approaching a target vehicle (22) having a lower travelling speed than the host vehicle (20), the method comprising the following steps:
estimating (S102) a lateral velocity of a target vehicle (22) present in front of the host vehicle (20), and
when the estimated lateral velocity of the target vehicle (22) exceeds an expected lateral velocity of the target vehicle (22) by at least a threshold value, adjusting (S105) a current reference minimum distance (d_ref) of the adaptive cruise control system (200) to a reduced reference minimum distance (d_ref').

2. The method according to claim 1, further comprising a step of:
determining (S103) the expected lateral velocity of the target vehicle (22) based on a current estimated or measured lateral velocity of the host vehicle (20) and/or characteristics of a road section in front of the host vehicle (20).

3. The method according to any one of claims 1 or 2, wherein
the reduced reference minimum distance (d_ref') has a predefined value, or
the method further comprises a step of determining a value of the reduced reference minimum distance (d_ref') in dependence of the estimated lateral velocity of the target vehicle (22).

4. The method according to any one of the preceding claims, wherein the reference minimum distance (d_ref) has a default value dependent of a targeted trailing distance (d_t),
optionally wherein said targeted trailing distance (d_t) is a targeted trailing distance selected by a driver of the host vehicle (20).

5. The method according to any one of the preceding claims, further comprising a step of:
in response to a determination that a selected target vehicle (22) of the adaptive cruise control system (200) has been lost, adjusting (S108) the reference minimum distance (d_ref, d_ref') of the adaptive cruise control system (200) to a default value thereof, if not already corresponding to the default value of the reference minimum distance (d_ref).

6. The method according to any one of the preceding claims, comprising the steps of:
in response to a detection of a road user (24) present in front of the host vehicle (20) and in a lane (28) adjacent to a host lane (26) in which the host vehicle (20) is present, estimating a lateral velocity of the detected road user (24),
determining whether the detected road user (24) is about to enter the host lane (26) based on the estimated lateral velocity of said road user (24), and
in response to a determination that the detected road user is about to enter the host lane (26), adjusting the current reference minimum distance (d_ref, d_ref') to a default value of the reference minimum distance (d_ref), if not already corresponding to said default value.

7. The method according to claim 6, further comprising a step of:
in response to the determination that the detected road user (24) is about to enter the host lane (26), controlling (S112) the adaptive cruise control system (200) to select said detected road user (24) as target vehicle if the detected road user (24) is closer to the host vehicle (20) than a currently selected target vehicle (22) of the adaptive cruise control system (200) or if no target vehicle has been selected by the adaptive cruise control system (200).

8. A computer program comprising instructions which, when executed by a computer, cause the computer to carry out the method according to any one of the preceding claims.

9. A computer-readable medium comprising instructions which, when executed by a computer, cause the computer to carry out the method according to any one of claims 1 to 7.

10. A control arrangement (100) configured to control an adaptive cruise control system (200),
said adaptive cruise control system (200) being configured to control travelling speed of a host vehicle (20) in dependence of a reference minimum distance (d_ref),
the reference minimum distance (d_ref) constituting a control parameter defining a distance to target vehicle (22) towards which the host vehicle (20) is to be braked when approaching a target vehicle (22) having a lower travelling speed than the host vehicle (20), the control arrangement (100) being configured to:
estimate a lateral velocity of a target vehicle (22) present in front of the host vehicle (20), and
when the estimated lateral velocity of the target vehicle (22) exceeds an expected lateral velocity of the target vehicle (22) by at least a threshold value, adjust a current reference minimum distance (d_ref) of the adaptive cruise control system (200) to a reduced reference minimum distance (d_ref').

11. The control arrangement (100) according to claim 10, wherein the control arrangement (100) further is configured to:
determine the expected lateral velocity of the target vehicle (22) based on a current estimated or measured lateral velocity of the host vehicle (20) and/or characteristics of a road section in front of the host vehicle (20).

12. The control arrangement (100) according to any one of claims 10 and 11, wherein the control arrangement (100) further is configured to:
in response to a determination that a selected target vehicle (22) of the adaptive cruise control system (200) has been lost, adjust the reference minimum distance (d_ref, d_ref') of the adaptive cruise control system (200) to a default value thereof, if not already corresponding to the default value of the reference minimum distance (d_ref).

13. The control arrangement (100) according to any one of claims 10 to 12, wherein the control arrangement (100) is configured to:
in response to a detection of a road user (24) present in front of the host vehicle (20) and in a lane adjacent to a host lane (26) in which the host vehicle (20) is present, estimate a lateral velocity of the detected road user (24),
determine whether the detected road user (24) is about to enter the host lane (26) based on the estimated lateral velocity of said road user (24), and
in response to a determination that the detected road user (24) is about to enter the host lane (26), adjust the current reference minimum distance (d_ref, d_ref') to a default value of the reference minimum distance (d_ref), if not already corresponding to said default value.

14. An adaptive cruise control system (200) configured to control travelling speed of a host vehicle (20) in dependence of a reference minimum distance (d_ref),
the reference minimum distance (d_ref) constituting a control parameter defining a distance to target vehicle (22) towards which the host vehicle (20) is to be braked when approaching a target vehicle (22) having a lower travelling speed than the host vehicle (20),
wherein the adaptive cruise control system (200) comprises the control arrangement (100) according to any one of claims 10 to 13.

15. A vehicle (1) comprising the control arrangement (100) according to any one of claims 10 to 13.
